Europäisches Patentamt

European Patent Office

Office européen des brevets

(11) Publication number: **0 306 767**
**A1**

## (12) EUROPEAN PATENT APPLICATION

(21) Application number: 88113712.9

(22) Date of filing: 23.08.88

(51) Int. Cl.⁴: **B27B 33/14** , **B23D 65/00** , **C21D 9/24**

(30) Priority: 08.09.87 US 93755

(43) Date of publication of application:
**15.03.89 Bulletin 89/11**

(84) Designated Contracting States:
**CH DE FR GB IT LI SE**

(71) Applicant: **BLOUNT, INC.**
**4520 Executive Park Drive**
**Montgomery Alabama 36192(US)**

(72) Inventor: **Scott, Lewis A.**
**19180 S.W. Indian Creek Ave.**
**Lake Oswego Oregon(US)**

(74) Representative: **Meddle, Alan Leonard et al**
**FORRESTER & BOEHMERT**
**Widenmayerstrasse 4/I**
**D-8000 München 22(DE)**

(54) **System for cutting complex structures.**

(57) A chain saw (10) for cutting complex structures includes saw chain (34) having cutters (38, 70) having teeth (46) each of which has a layer (54) of tungsten carbide fused onto the kerf side and bottom cutting portions (50, 52) thereof. The chain saw has an asymmetric saw bar (20) whose axis (30) extends at an angle of between eighteen and thirty degrees below the center line (18) of the saw bar mounting studs (16).

FIG.1

EP 0 306 767 A1

## SYSTEM FOR CUTTING COMPLEX STRUCTURES

This invention relates to flexible and articulated cutting systems and, more particularly, to such systems suitable for penetrating and rapidly cutting complex building structures composed of various types of material.

Articulated and flexible cutting systems have long been used to cut diverse materials such as wood, masonry and metal. One of the most well-known and highly developed of such systems is commonly known as "saw chain", which was originally developed for use in hand held chain saws for cutting timber. Although the product is widely used and easily available, its use for other applications has been, at best, only marginally successful.

A possible use for saw chain is in fire fighting and contract demolition work. Such, however, requires a cutting system which can penetrate and rapidly cut out sections of building structures comprised of sheet metal, wood, composition roofing, etc., often held together with metal fasteners such as nails. The cutting depth or total thickness of the structure being cut is rarely greater than eight inches. Previous attempts at developing an articulated and flexible cutting system for this use, however, have not been successful.

Attempts have been made to adapt conventional saw chain for fire fighting and contract demolition word by brazing hard, brittle inserts into a typical saw chain cutter or by applying a thin, hard material to the surface of the cutter in which the cutting edge is formed. Neither method has proven effective for the intended application. A carbide insert, for example, often has residual stresses in it which can ultimately cause shattering of the insert in use. Furthermore, inserting a carbide piece in a saw chain cutter results in a cutter with a limited sharpening life. The length of such an insert is limited, thus the cutter can be sharpened only a few times. In short, presently available cutting systems do not incorporate a basic structure which is designed for penetration into hard, abrasive materials.

It is an object of the present invention to provide a flexible and articulated cutting system particularly suitable for penetrating and rapidly cutting composite structures comprising such diverse materials as sheet metal, wood, composition roofing, nails, etc.

Accordingly, the invention provides, in one aspect, a cutter for a saw chain comprising: an upstanding depth gauge adjacent the forward portion of the cutter; and a cutting tooth disposed rearwardly of the depth gauge, the tooth comprising a supporting metal substrate having a kerf side cutting portion and a kerf bottom cutting portion, a layer of carbide fused onto the kerf side cutting and kerf bottom cutting portions of the substrate, and a sharp cutting edge, the edge being ground across the kerf side cutting and kerf bottom cutting portions of the substrate and the layer of carbide fused thereto; characterised by the layer of carbide and the substrate being heat treated as a composite to eliminate residual stresses in the layer of carbide and the thickness of the layer of carbide being greater than about 0.005 inch (0.013 cm).

In another aspect, the invention provides a chain saw having a housing, a chain driving sprocket mounted on the housing, saw bar mounting studs mounted on the housing and disposed on a center line, and a saw bar mounted on the saw bar mounting studs and having upper and lower edges and a longitudinal axis, which chain saw is characterised in that the said longitudinal axis extends at an angle of between about eighteen and thirty degrees below the center line of the saw bar mounting studs.

The present invention thus provides a saw chain with a cutter configuration which in conjunction with a guide bar structure, allows the cutting chain rapidly to penetrate sheet metal and abrasive composition roofing surfaces.

The invention also provides a cutter with a cutting edge structure which resists a high impact loading and abrasive wear.

A cutter embodying the invention reliably supports a cutting edge material such that the cutting edge configuration is effective to cut through composite materials up to eight inches in thickness.

A chain saw embodying the invention has a chain particularly suitable for penetrating and rapidly cutting composite building structures wherein the configuration of the chain saw itself is such as to minimize risk to the operator.

In order that the invention may be more readily understood an embodiment thereof will now be described, by way of example, with reference to the accompanying drawings, in which:

Figure 1 is a side elevational view with parts broken away of a chain saw incorporating the instant invention;

Figure 2 is a schematic view of a cutter according to the present invention as it moves around the end of a saw bar during the boring mode of cutting;

Figure 3 is a view of the cutter as it cuts into a roof structure;

Figure 4 is a top plan view of a saw chain cutter according to the present invention;

Figure 5 is a cross-sectional view on line 5-5 of Figure 4;

Figure 6 is a sectional view taken on line 6-6 of Figure 4;

Figure 7 is a top plan view of another cutter suitable for use in the present invention; and

Figure 8 is a cross-sectional view on line 8-8 of Figure 7.

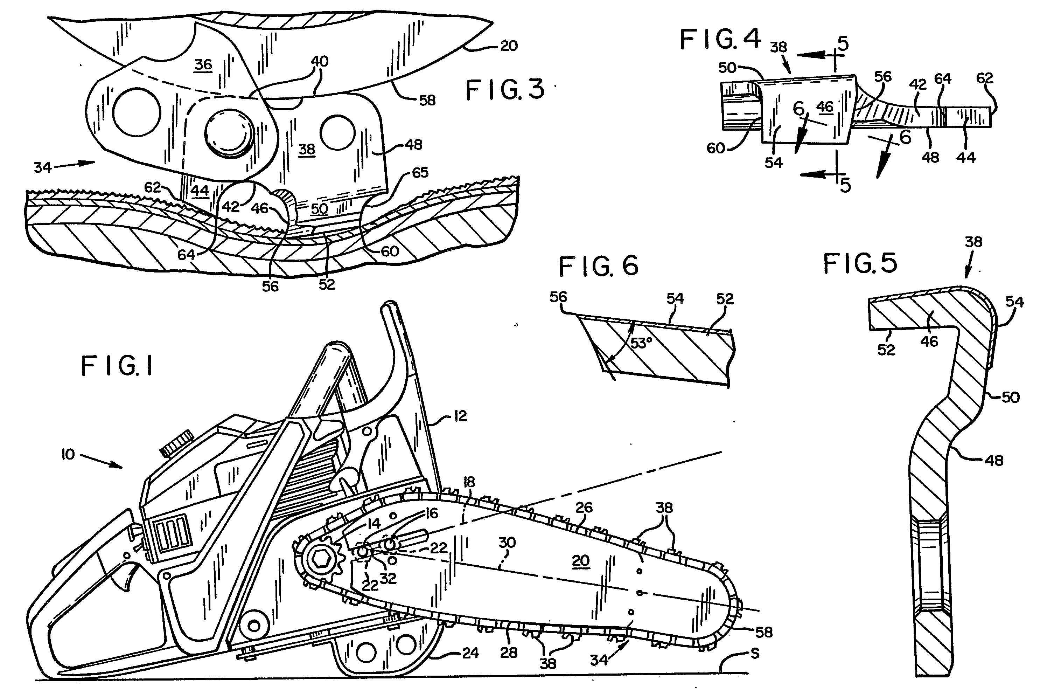

Referring to the drawings and particularly Figure 1, the invention is shown incorporated in a chain saw 10 having a housing 12 in which is mounted a saw chain driving sprocket 14 and saw bar mounting studs 16 which are disposed on a center line 18. A saw bar or saw chain guide bar 20 is attached to studs 16 by nuts 22. A skid plate 24 is mounted on the bottom of housing 12 and positions chain saw 10 such that saw bar 20 and saw chain 34 does not contact a support surface S when the chain saw rests on the support surface.

Saw bar 20 has upper and lower edges 26, 28 and a longitudinal axis 30 which passes through a point 32 between studs 16. Axis 30 extends at an angle of between about eighteen and thirty degrees below center line 18, that is, axis 30 makes an angle of between about eighteen and thirty degrees with center line 18, projecting downwardly therefrom.

Saw bar 20 is asymmetric with respect to its longitudinal axis 30. Specifically, the distance between point 32 and lower edge 28 is greater than the distance between point 32 and upper edge 26. Also, lower edge 28 is contoured so that a saw chain 34 remains fully in contact with lower edge 28 as the chain progresses toward sprocket 14 and passes around the bar.

Mounting skid plate 24 on the bottom of housing 12 and placing saw bar 20 such that its axis 30 is at an angle with respect to center line 18, results in less kickback potential for the chain saw. It also facilitates safe penetration of roofing material when, for example, the saw is used to cut through roofing as during fire fighting. As stated above, when chain saw 10 rests on skid plate 24, bar 20 does not interfere with surface S. When saw 10 is tilted on skid plate 24, chain 34 can start to bore. This is done in the safest possible manner. As chain 34 starts to penetrate, saw 10 can be lifted from plate 24 to a position wherein bar 20 (axis 30 thereof) is essentially perpendicular to the material being cut, yet the apparatus can remain at a safe and convenient attitude as respects the user. That is, placing axis 30 of saw bar 20 at an angle of between about eighteen and thirty degrees with respect to center line 18, means that saw 10 does not have to be rotated as far as it would if the axis of the saw bar were colinear with the center line through the mounting studs.

As shown in Figure 2, saw chain 34 includes center mounted drive links 36 and a plurality of side links, some of which serve merely as tie straps, while others comprise right-hand and left-hand cutter elements 38. Each element 38 includes a lower or bar-engaging edge 40 and a top edge 42 from which a depth gauge 44 projects upwardly. A cutting tooth 46 projects upwardly from top edge 42 rearwardly of depth gauge 44.

As shown in Figures 4, 5 and 6, tooth 46 comprises a supporting steel substrate 48 having a kerf side cutting portion 50 and a kerf bottom cutting portion 52. A layer 54 of tool grade tungsten carbide is fused onto portions 50, 52, that is, layer 54 is fused onto all the surfaces of cutting tooth 46 across which a cutting edge 56 is formed. Thus, edge 56 is ground across both the side and bottom cutting portions 50, 52 of substrate 48 and the layer 54 of tungsten carbide which is fused thereto.

Layer 54 is fused onto substantially the entire length of the side and bottom cutting portions 50, 52 of substrate 48. In this manner a cutting edge 56 can be ground onto tooth 46 across the tungsten carbide layer 54 fully along the length of tooth 46. A cutting edge including tungsten carbide can thus be achieved over the full length of tooth 46. This means that a greater sharpening life for tooth 46 is possible.

It has been found that a layer 54 comprising carbide particules one micron in size fused to a steel substrate 48 heat treatable to a Rockwell hardness of between about thirty-eight and sixty-four, achieves desirable cutting. Layer 54 is preferably of a thickness greater than about 0.005 inch (0.013cm) and is preferably between about 0.012 inch (0.030cm) and 0.015 inch (0.038cm). Use of one micron size carbide particles permits tooth 46 to retain a good sharp edge. All carbide cutting edges tend to break down to an edge thickness of five to ten times the carbide grain size. Use of carbide grains of one micron in size reduces edge thickness to its optimum dimension. With suitable sharpening techniques it is possible to develop a cutting edge of less than twenty-five microns. With larger carbide particles, of course, a more rounded edge would result and this is less desirable.

Because layer 54 is fused to substrate 48, there is no possibility of stripping the layer from the substrate. Also, whereas a carbide insert has residual stresses in it which can cause shattering of the insert, applying layer 54 to substrate 48 and then heat treating cutter element 38 as a composite, eliminates such residual stresses. Applying the carbide as a layer to the substrate, permits a cutting edge geometry such that the edge itself can be more reliably supported. Use of the carbide in a layer also permits a more open cutter design, thereby to avoid the possibility of the cutting tooth grabbing chunks of material and pushing them along the chain. Layer 54 is desirably applied to substrate 48 by the "CONFORMA CLAD" process, of Imperial Clevite, Inc., Salem, Indiana. The process is described in an article by Manek R. Dustoor, PhD., published in "Refractory and Hard Metals" magazine, March 1983 issue.

A desirable geometry for the cutter elements 38 and the boring end 58 of saw bar 20 is shown in Figure 2, wherein "R" is defined as the cutting radius of cutting edge 56 of kerf bottom cutting portion 52 as element 38 passes around boring end 58 of saw bar 20 during the boring mode of cutting. As shown in Figure 3, when boring into a roof, for example, particularly if the roof is hot as occurs in a fire, the roofing material being cut deforms and may possibly achieve a radius of deformation equal to "R". Cutting tooth 46 must thus be made with a clearance angle $\theta$ such that the trailing end 60 of kerf bottom cutitng portion 52 does not intersect the circular path of the leading end or cutting edge 56 as the cutter element 38 moves around end 58. Similarly, the leading end 62 of depth gauge 44 is relieved, or angled downwardly on progressing forwardly, such that it does not intersect the circular path of the trailing end 64 as cutter element 38 moves around end 58.

For any given radius of cut and specific cutter size and configuration, the length of the cutter top plate, that is, the length of kerf bottom cutting portion 52 and the controlling surface of depth gauge 44 form chords relative to their respective arcs of travel around end 58 of saw bar 20. The length of the top plate, that is the length of the kerf bottom cutting portion 52, $C_T$, positioned at clearance angle $\theta$, becomes a chordal length subtending an angle $\alpha$ bounded by radius R. Similarly, the depth gauge control surface becomes the chordal length $C_d$ subtending an angle $\phi$ bounded by the radius R-d, where "d" is the depth of cut. The two chords are separated by an angle $\beta$ within the parameters of the cutter body when that body is contructed within the chain assembly moving around the circumference of saw bar 20 which has an end radius R-$h_c$, where "$h_c$" is the cutter height. As shown in Figures 2 and 3, the dimension "d" must be equal to or greater than the aggregate thickness of composition roofing material (approximately 0.040 inch or 0.102cm). As illustrated in Figure 2, $C_T$ and $C_d$ are not true or full chords and thus do not interfere with the deformed surface of the roof, that is with the arcs formed by the radii R and R-d, respectively. Cutout 65 is made in portion 52 to insure that there will be no interference.

For a twelve tooth three-eights inch (0.95cm) pitch sprocket, a desirable length for $C_T$ is 0.385 inch (0.978cm); a desirable length for $C_d$ is 0.119 inch (0.302cm); a desirable angle $\alpha$ is 12° 33'; a desirable angle $\phi$ is 3° 59'; a desirable angle $\beta$ is 8° 17'; a desirable distance d is 0.060 inch (0.152cm); and a desirable height of cutter $h_c$ is 0.506 inch (1.285cm).

As shown in Figure 6, the angle of cutting edge 56 is preferably made about fifty-three degrees. This is greater than that used for cutting wood. It is necessary for supporting carbide layer 54 under the severe impact and abrasive cutting conditions experienced by this cutter system.

In addition to such materials as asphalt based composition roofing, the cutting system of the present invention is able to cut through sheet metal sheathing made of steel or aluminum. This material is relatively thin and is often applied over one or more layers of old composition roofing. A wide cutting edge as shown in Figures 4 and 5 has a tendency to "skate" across the surface of the metal before beginning to cut.

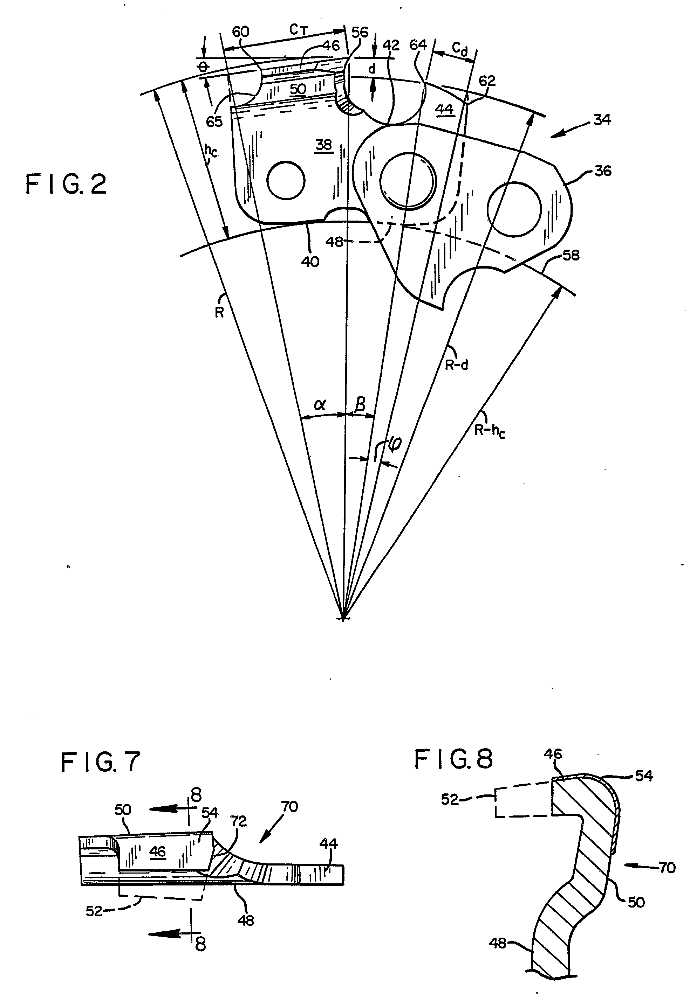

In order to reduce this skating and cause more rapid penetration, a single unique cutter 70 having a narrow cutting edge 72 is preferably included in chain 34. See Figures 7 and 8. Cutter 70 is formed merely by cutting back portion 52 of cutting tooth 46 such that the narrower cutting edge 72 is achieved, otherwise the geometry and construction are the same as element 38. Cutter 70 acts as a slitter which rips a slot in thin sheet metal much the same as a can opener opens a sealed metal can. Chain 34 then rapidly penetrates the metal, ripping out a full kerf width.

## Claims

1. A cutter for a saw chain comprising: an upstanding depth gauge (44) adjacent the forward portion of the cutter; and a cutting tooth (46) disposed rearwardly of the depth gauge, the tooth comprising a supporting metal substrate (48) having a kerf side cutting portion (50) and a kerf bottom cutting portion (52), a layer (54) of carbide fused onto the kerf side cutting and kerf bottom cutting portions (50, 52) of the substrate (48), and a sharp cutting edge (56), the edge being ground across the kerf side cutting and kerf bottom cutting portions (50, 52) of the substrate (48) and the layer (54) of carbide fused thereto; characterised by the layer (44) of carbide and the substrate (48) being heat treated as a composite to eliminate residual stresses in the layer of carbide and the thickness of the layer (44) of carbide being greater than about 0.005 inch (0.013cm).

2. A cutter according to claim 1, wherein the carbide layer (44) is fused onto substantially the entire length of the kerf side cutting and kerf bottom cutting portions (50, 52) of the substrate (48), whereby the cutting edge (56) of the tooth (46) can be ground across the carbide layer fully along the length of the tooth.

3. A cutter according to claim 1 or 2, wherein the carbide layer (44) comprises carbide particules of about one micron in size.

4. A cutter according to any one of claims 1 to 3, wherein the thickness of the carbide layer (44) is between about 0.012 inch (0.030cm) and 0.015 inch (0.038cm).

5. A cutter according to any one of claims 1 to 4, wherein the kerf bottom cutting portion (52) has a length and a clearance angle so that the trailing end (60) of the kerf bottom cutting portion does not intersect the circular path of the leading end (56) of the kerf bottom cutting portion as the cutter moves in an arc around the end of a saw bar (20) mounted on a chain saw.

6. A cutter according to any one of claims 1 to 5, wherein the leading end (62) of the depth gauge (44) is relieved so that the leading end of the depth gauge does not intersect the circular path of the trailing end (64) of the dpeth gauge as the cutter element moves in an arc around the end of a saw bar (20) mounted on a chain saw.

7. A saw chain suitable for cutting composite structures including a layer of sheet metal material, the chain comprising: a plurality of cutters (38) of a first type according to claim 1; and only one cutter (70) of a second type, said second type of cutter comprising a cutter of the said first type wherein the kerf bottom cutting portion (52) of the cutting tooth (46) is cut back, the side cutting portion (50) being unchanged, whereby the bottom cutting portion of the second type of cutter is narrower than the bottom cutting portion of the first type of cutter (38).

8. A chain saw having a housing (12), a chain driving sprocket (14) mounted on the housing, saw bar mounting studs (16) mounted on the housing and disposed on a center line (18), and a saw bar (20) mounted on the saw bar mounting studs and having upper and lower edges (26, 28) and a longitudinal axis (30), which chain saw is characterised in that the said longitudinal axis (30) extends at an angle of between about eighteen and thirty degrees below the center line (18) of the saw bar mounting studs.

9. A chain according to claim 8, wherein the saw bar (20) is asymmetric with respect to its longitudinal axis (30), the distance between a point (32) between the saw bar mounting studs (16) and the lower edge (28) of the saw bar being greater than the distance between the said point (32) and the upper edge (26) of the saw bar, the lower edge of the saw bar being so contoured that it remains fully in contact with a saw chain (34) as the chain progresses toward the chain driving sprocket (14).

FIG.3

FIG.4

FIG.6

FIG.5

FIG.1

EP 0 306 767 A1

FIG.2

FIG.7

FIG.8

## DOCUMENTS CONSIDERED TO BE RELEVANT

| Category | Citation of document with indication, where appropriate, of relevant passages | Relevant to claim | CLASSIFICATION OF THE APPLICATION (Int. Cl.3) |
|---|---|---|---|
| Y | DE-B-1 453 042 (MC CULLOCH) <br> * column 3, lines 15-24 * <br> --- | 1 | B 27 B 33/14 <br> B 23 D 65/00 <br> C 21 D 9/24 |
| Y | DE-B-1 192 829 (SANDVIKENS JERNVERKS) <br> * claims 1,9; column 5, lines 20-35 * | 1 | |
| A | | 2 | |
| | --- | | |
| A | DE-C- 974 524 (LOOS & KINKEL) <br> * page 2, lines 48-86 * <br> --- | 1 | |
| A | US-A-3 820 419 (MC LAGAN) <br> * abstract; claim 1 * <br> --- | 1 | |
| A | DE-A-2 163 429 (EISHIN) <br> * page 2, lines 31-35; claims 1,2 ; <br> figures 2-4 * <br> --- | 1 | |
| A | US-A-3 144 059 (OEHRLI) <br> * column 8, lines 27-32 * <br> --- | 5 | |
| A | DE-B-2 539 445 (OMARK) <br> * claim 1; figure 1 * <br> --- | 6 | **TECHNICAL FIELDS SEARCHED (Int. Cl.3)** |
| A | SOVIET INVENTIONS ILLUSTRATED <br> abstract no. 44348, Derwent <br> Publications Ltd., Section Mechanical, <br> week B35, 10th October 1979, page 13; & <br> SU - A - 625 925 (FOREST POWER) <br> 07-09-1978 <br> --- | 8,9 | B 23 D 57/02 <br> B 23 D 63/00 <br> B 23 D 65/00 <br> B 27 B 17/02 <br> B 27 B 33/00 <br> C 21 D 9/24 |
| A | DE-B-1 503 968 (LAHTINEN) <br> * claim 1; column 2, line 65 - column <br> 3, line 11; figure 1 * <br> ----- | 9 | |

The present search report has been drawn up for all claims

| Place of search | Date of completion of the search | Examiner |
|---|---|---|
| BERLIN | 29-11-1988 | MARTIN A E W |

EPO FORM 1503 03.82 (P0401)